# DEMANDE DE BREVET EUROPEEN

(11) **EP 4 837 837 A1**
(43) Date de publication de la demande: **11.11.2026**
(21) Numéro de dépôt: 26173981.7
(22) Date de dépôt: 22.04.2026
(51) Int. Cl.: B64C 25/00

(54) **AÉRONEF COMPRENANT AU MOINS UN ÉLÉMENT LONGILIGNE SOLIDAIRE D'UN SYSTÈME MOBILE ET AU MOINS UNE FORME HÉLICOÏDALE POSITIONNÉE AUTOUR DE L'ÉLÉMENT LONGILIGNE**

(30) Priorité: 09.05.2025 FR 2504912
(71) Demandeur: Airbus Operations S.A.S., 31060 Toulouse (FR)
(72) Inventeur: MOLIN, Nicolas, 31060 TOULOUSE (FR)
(74) Mandataire: Fantin, Laurent

(57) **Abrégé**

L'invention a pour objet un aéronef comprenant au moins un système mobile (44) configuré pour occuper une position déployée dans laquelle le système mobile (44) est positionné au moins en partie hors d'un carénage de l'aéronef ainsi qu'une position rétractée dans laquelle le système mobile (44) est positionné à l'intérieur du carénage, ledit système mobile (44) comportant :
- au moins un élément longiligne (50, 50') positionné de manière à interférer avec un flux d'air (42) lorsque le système mobile (44) est en position déployée,
- au moins une forme hélicoïdale (54), située au niveau de la surface extérieure dudit au moins un élément longiligne (50, 50'), qui suit une trajectoire hélicoïdale autour de l'élément longiligne (50, 50').

## Description

La présente demande se rapporte à un aéronef comprenant au moins un élément longiligne solidaire d'un système mobile et au moins une forme hélicoïdale positionnée autour de l'élément longiligne.

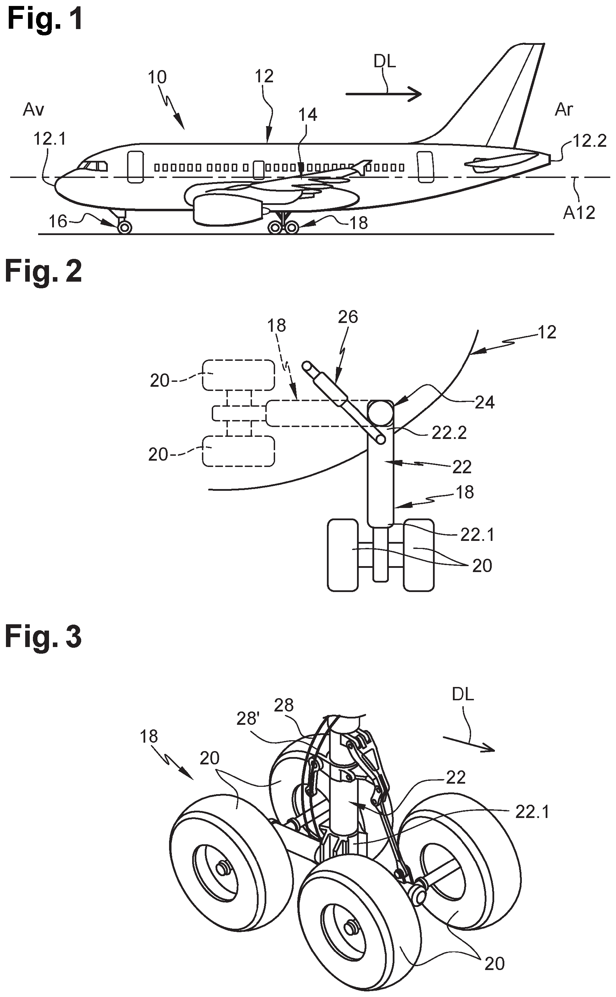

Selon un mode de réalisation visible sur la figure 1, un aéronef 10 comprend un fuselage 12, qui s'étend entre une pointe avant 12.1 et une pointe arrière 12.2, ainsi que des ailes 14 disposées de part et d'autre du fuselage 12 et reliées à ce dernier.

Pour la suite de la description, un axe longitudinal A12 de l'aéronef 10 correspond à l'axe horizontal, lorsque l'aéronef 10 est au sol, qui s'étend de la pointe avant 12.1 à la pointe arrière 12.2 de l'aéronef 10. Une direction longitudinale DL est une direction parallèle à l'axe longitudinal A12. En vol, un flux d'air s'écoule selon une direction parallèle à la direction longitudinale DL, de l'avant Av vers l'arrière Ar.

L'aéronef 10 comprend un train d'atterrissage avant 16 positionné à proximité de la pointe avant 12.1 ainsi que deux trains d'atterrissage principaux 18 positionnés de part et d'autre du fuselage 12, à l'arrière des ailes 14. Chaque train d'atterrissage principal 18 est configuré pour occuper une position déployée, comme illustré en trait fort sur la figure 2, dans laquelle il est positionné en saillie par rapport au fuselage 12 ainsi qu'une position rétractée, comme illustré en trait pointillé sur la figure 2, dans laquelle il est positionné dans une case de train d'atterrissage. Chaque train d'atterrissage principal 18 comprend des roues 20, une jambe 22 qui s'étend entre une première extrémité 22.1 à laquelle sont reliées les roues 20 et une deuxième extrémité 22.2 reliée à une structure du fuselage 12 par une articulation 24 ainsi qu'au moins un actionneur 26 permettant au train d'atterrissage principal 18 d'alternativement occuper les positions rétractée et déployée.

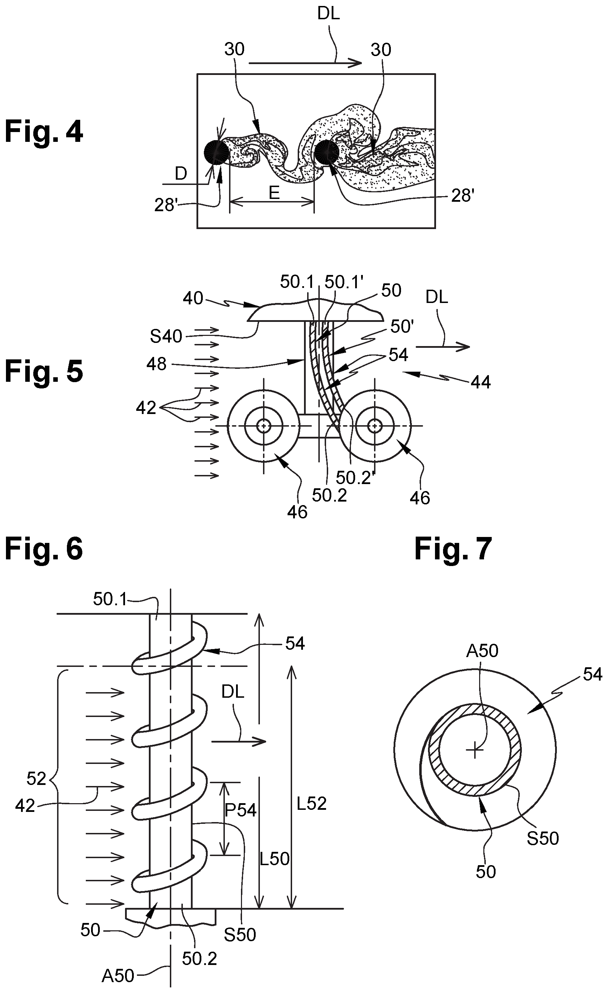

Selon une configuration visible sur la figure 3, chaque train d'atterrissage principal 18 comprend deux conduits 28, 28' (également appelés flexibles) qui s'étendent du fuselage 12 vers la première extrémité 22.1 de la jambe 22. Lorsque le train d'atterrissage principal 18 est dans la position déployée, les deux conduits 28, 28' s'étendent chacun selon une direction sensiblement perpendiculaire à la direction longitudinale DL et sont alignés et décalés selon la direction longitudinale DL. Comme illustré sur la figure 4, les conduits 28, 28' sont espacés d'un écartement E supérieur à 3 fois le diamètre D des conduits 28, 28'.

Lors des phases de décollage et d'atterrissage, ces deux conduits 28, 28' interagissent avec le flux d'air qui s'écoule autour de l'aéronef 10 et génèrent des perturbations aérodynamiques 30. Ces dernières produisent des nuisances sonores en raison de l'écartement E entre les conduits 28, 28' et de leur alignement selon la direction du flux d'air.

Pour remédier à cet inconvénient et réduire le bruit parasite produit par les deux conduits 28, 28', une première solution consiste à modifier le cheminement des deux conduits 28, 28'. Ce changement nécessite un nouveau développement et une nouvelle certification.

Une deuxième solution consiste à rapprocher les deux conduits 28, 28' de manière à réduire les nuisances sonores. Cette solution n'est pas envisageable car des phénomènes de friction entre les conduits 28, 28' et leurs guides sont augmentés lorsque le train d'atterrissage est en position rétractée si les conduits 28, 28' ne sont pas suffisamment écartés entre eux.

La présente invention vise à remédier à tout ou partie des inconvénients de l'art antérieur.

A cet effet, l'invention a pour objet un aéronef comprenant un carénage ainsi qu'au moins un système mobile configuré pour occuper une position déployée dans laquelle le système mobile est positionné au moins en partie hors du carénage ainsi qu'une position rétractée dans laquelle le système mobile est positionné à l'intérieur du carénage, ledit système mobile comportant au moins des premier et deuxième éléments longilignes, chacun d'eux présentant une surface extérieure et étant positionné de manière à interférer avec un flux d'air s'écoulant selon une direction longitudinale lorsque le système mobile est en position déployée, lesdits premier et deuxième éléments longilignes étant décalés entre eux selon la direction longitudinale, le premier élément longiligne étant positionné en amont du deuxième élément longiligne selon le sens d'écoulement du flux d'air.

Selon l'invention, le système mobile comprend au moins une première forme hélicoïdale autour du premier élément longiligne ainsi qu'au moins une deuxième forme hélicoïdale autour du deuxième élément longiligne. En complément, la première forme hélicoïdale présente un premier sens d'enroulement et la deuxième forme hélicoïdale présente un deuxième sens d'enroulement opposé au premier sens d'enroulement et/ou la première forme hélicoïdale présente un premier pas et la deuxième forme hélicoïdale présente un deuxième pas différent du premier pas.

Cette solution permet de réduire les nuisances sonores produites en raison de l'interaction de l'élément longiligne avec le flux d'air.

Selon une autre caractéristique, l'élément longiligne et la forme hélicoïdale positionnée autour de l'élément longiligne forment une unique et même pièce.

Selon une autre caractéristique, l'élément longiligne et la forme hélicoïdale positionnée autour de l'élément longiligne sont deux pièces distinctes.

Selon une autre caractéristique, la forme hélicoïdale est enroulée autour de l'élément longiligne.

Selon une autre caractéristique, chaque élément longiligne comprend une première extrémité située à l'intérieur du carénage ou proche de ce dernier ainsi qu'une deuxième extrémité plus écartée que la première extrémité du carénage lorsque le système mobile est en position déployée et présente une longueur correspondant à une distance séparant les première et deuxième extrémités en suivant l'élément longiligne. En complément, la forme hélicoïdale présente autour de l'élément longiligne s'étend sur au moins un tronçon de l'élément longiligne qui présente une longueur supérieure ou égale à 2/3 de la longueur de l'élément longiligne.

Selon une autre caractéristique, la forme hélicoïdale s'étend à partir de la deuxième extrémité de l'élément longiligne.

Selon une autre caractéristique, la forme hélicoïdale présente un pas compris entre 1 et 10 fois le diamètre de l'élément longiligne.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une représentation schématique d'un train d'atterrissage principal en position déployée et en position rétractée,
- La figure 3 est une vue en perspective d'un train d'atterrissage principal en position déployée illustrant un mode de réalisation de l'art antérieur,
- La figure 4 est une coupe transversale de deux conduits du train d'atterrissage principal visible sur la figure 3,
- La figure 5 est une vue latérale d'un train d'atterrissage en position déployée illustrant un mode de réalisation de l'invention,
- La figure 6 est une vue latérale d'un tronçon d'un conduit du train d'atterrissage visible sur la figure 5,
- La figure 7 est une coupe transversale d'un conduit du train d'atterrissage visible sur la figure 5,
- La figure 8 est une représentation schématique d'un conduit d'un train d'atterrissage illustrant un mode de réalisation de l'invention,
- La figure 9 est une représentation schématique d'un conduit d'un train d'atterrissage illustrant un autre mode de réalisation de l'invention,
- La figure 10 est une coupe longitudinale d'une partie d'un conduit d'un train d'atterrissage illustrant un mode de réalisation de l'invention,
- La figure 11 est une coupe longitudinale d'une partie d'un conduit d'un train d'atterrissage illustrant un autre mode de réalisation de l'invention,
- La figure 12 est une coupe transversale d'un conduit d'un train d'atterrissage illustrant un autre mode de réalisation de l'invention.

Selon un mode de réalisation visible sur la figure 5, un aéronef comprend un fuselage 40 qui présente une surface aérodynamique S40 contre laquelle s'écoule un flux d'air 42 lorsque l'aéronef est en vol ainsi qu'un train d'atterrissage 44 configuré pour occuper une position déployée dans laquelle le train d'atterrissage 44 est positionné en saillie par rapport à la surface aérodynamique S40 du fuselage 40 et une position rétractée dans laquelle le train d'atterrissage 44 n'est pas positionné en saillie par rapport à la surface aérodynamique S40 du fuselage 40 mais positionné dans une case de train d'atterrissage située à l'intérieur du fuselage 40.

Lorsque l'aéronef est en vol, le flux d'air 42 s'écoule selon une direction longitudinale DL de l'amont ou de l'avant vers l'aval ou l'arrière.

Selon un mode de réalisation, chaque train d'atterrissage 44 comprend des roues 46, une jambe 48 qui s'étend entre une première extrémité à laquelle sont reliées les roues 46 et une deuxième extrémité reliée à une structure du fuselage 40 par une articulation ainsi qu'au moins un actionneur permettant au train d'atterrissage 44 d'alternativement occuper les positions rétractée et déployée. A titre d'exemple, le train d'atterrissage 44 est un train d'atterrissage principal.

Selon une configuration visible sur la figure 5, chaque train d'atterrissage 44 comprend au moins des premier et deuxième conduits 50, 50' (également appelés flexibles) qui s'étendent du fuselage 40 vers la première extrémité de la jambe 48. Lorsque le train d'atterrissage 44 est dans la position déployée, les premier et deuxième conduits 50, 50' s'étendent chacun selon une direction sensiblement perpendiculaire à la direction longitudinale DL et sont alignés et décalés l'un par rapport à l'autre selon la direction longitudinale DL. Ces premier et deuxième conduits 50, 50' sont espacés d'un écartement supérieur à 3 fois le diamètre des conduits 50, 50'.

Bien entendu, l'invention n'est pas limitée au train d'atterrissage. Elle peut s'appliquer à au moins un système mobile 44 configuré pour occuper une position déployée dans laquelle le système mobile 44 est positionné au moins en partie hors d'un carénage de l'aéronef ainsi qu'une position rétractée dans laquelle le système mobile 44 est positionné à l'intérieur du carénage de l'aéronef et n'interfère pas avec le flux d'air 42. Le carénage peut être une partie du fuselage, de l'aile, de l'empennage ou tout autre partie de l'aéronef en contact avec le flux d'air 42.

Ce système mobile 44 comprend au moins un élément longiligne 50 positionné de manière à interférer avec le flux d'air 42 lorsque le système mobile 44 est en position déployée.

Selon un agencement, le système mobile 44 comprend au moins des premier et deuxième éléments longilignes 50, 50' qui s'étendent chacun selon une direction sensiblement perpendiculaire à la direction longitudinale DL, les premier et deuxième éléments longilignes 50, 50' étant alignés et décalés entre eux selon la direction longitudinale DL, le premier élément longiligne 50 étant positionné en amont du deuxième élément longiligne 50 selon le sens d'écoulement du flux d'air 42'.

Chaque élément longiligne 50, 50' comprend une première extrémité 50.1, 50.1' située à l'intérieur du carénage ou proche de ce dernier ainsi qu'une deuxième extrémité 50.2, 50.2' plus écartée que la première extrémité 50.1, 50.1' du carénage lorsque le système mobile 44 est en position déployée. Chaque élément longiligne 50, 50' présente une longueur L50 correspondant à une distance séparant les première et deuxième extrémités 50.1, 50.2 en suivant l'élément longiligne 50, 50'. Chaque élément longiligne 50, 50' comprend au moins un tronçon 52 interférant avec le flux d'air 42 lorsque le système mobile 44 est en position déployée. Ce tronçon 52 présente une longueur L52 inférieure ou égale à la longueur L50 de l'élément longiligne 50, 50'.

Selon un mode de réalisation visible sur la figure 7, chaque élément longiligne 50, 50' est un élément tubulaire, comme un tube ou un flexible par exemple, configuré pour canaliser un fluide.

Selon un autre mode de réalisation, chaque élément longiligne 50, 50' est un cylindre plein comme un câble par exemple.

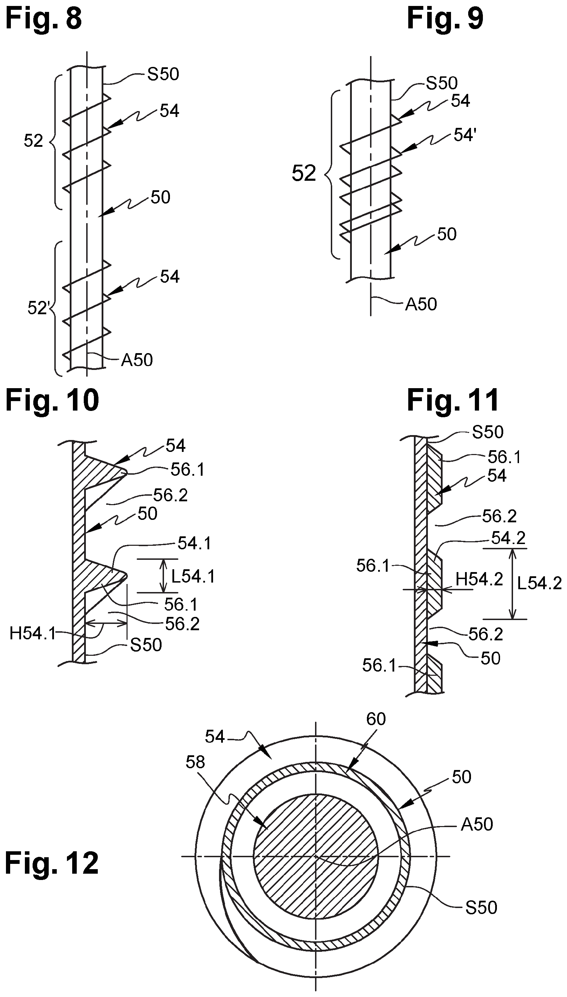

Selon un autre mode de réalisation visible sur la figure 12, chaque élément longiligne 50, 50' est une gaine dans laquelle est positionné un câble ou un conduit.

Bien entendu, l'invention n'est pas limitée à ces modes de réalisation pour le (ou les) élément(s) longiligne(s) 50, 50'. Quel que soit le mode de réalisation, chaque élément longiligne 50, 50' présente une surface extérieure S50 sensiblement cylindrique et un axe longitudinal A50. Selon une configuration, chaque élément longiligne 50, 50' est un élément souple capable de se déformer.

Selon une particularité, le système mobile 44 comprend au moins une forme hélicoïdale 54, située au niveau de la surface extérieure S50 dudit au moins un élément longiligne 50, 50', qui suit une trajectoire hélicoïdale s'enroulant selon un sens d'enroulement autour de l'élément longiligne 50, 50'. Cette forme hélicoïdale 54 présente un pas P54 qui peut être constant ou variable.

Lorsque le système mobile 44 comprend plusieurs éléments longilignes 50, 50', le système mobile 44 comprend, au moins autour du premier élément longiligne 50, 50' (le plus en amont), au moins une forme hélicoïdale 54.

Selon une configuration, le système comprend au moins des premier et deuxième éléments longilignes 50, 50', au moins une première forme hélicoïdale 54 autour du premier élément longiligne 50 ainsi qu'au moins une deuxième forme hélicoïdale 54 autour du deuxième élément longiligne 50'. Selon une première variante, les formes hélicoïdales 54 présentent le même sens d'enroulement.

Selon une deuxième variante, la première forme hélicoïdale 54 présente un premier sens d'enroulement et la deuxième forme hélicoïdale 54 présente un deuxième sens d'enroulement opposé au premier sens d'enroulement. Cette configuration améliore l'atténuation acoustique.

Selon un agencement, en présence de premier et deuxième éléments longilignes 50, 50', la première forme hélicoïdale 54 présente un premier pas et la deuxième forme hélicoïdale présente un deuxième pas différent du premier pas. Cet agencement améliore l'atténuation acoustique.

Selon une configuration, la forme hélicoïdale 54 est une forme en relief par rapport à la surface extérieure S50 de l'élément longiligne 50. En variante, la forme hélicoïdale est une forme en creux par rapport à la surface extérieure S50 de l'élément longiligne 50. Comme illustré sur les figures 10 et 11, chaque forme hélicoïdale 54 présente, dans un plan passant par l'axe longitudinal A50 de l'élément longiligne 50, une alternance de formes en relief et en creux 56.1, 56.2. Selon les modes de réalisation, les formes en relief 56.1 présentent des sections inférieures à celles des formes en creux 56.2 comme illustré sur la figure 10 ou supérieures à celle des formes en creux 56.2 comme illustré sur la figure 11.

Selon un agencement, la forme hélicoïdale 54 présente une section transversale (dans un plan perpendiculaire à sa trajectoire d'enroulement) continue et constante.

Selon un mode de réalisation visible sur la figure 10, la forme hélicoïdale 54 est un filet 54.1 qui présente une section transversale approximativement triangulaire. Bien entendu, l'invention n'est pas limitée à cette géométrie pour la section transversale. Ce filet 54.1 présente une largeur L54.1 (mesurée selon une direction parallèle à la surface extérieure S50) et une hauteur H54.1 (mesurée selon une direction perpendiculaire à la surface extérieure S50) supérieure ou sensiblement égale à la largeur L54.1.

Selon un mode de réalisation visible sur la figure 11, la forme hélicoïdale 54 est une bande de matière 54.2 qui présente une section transversale approximativement rectangulaire ou trapézoïdale. Cette bande de matière 54.2 présente une largeur L54.2 (mesurée selon une direction parallèle à la surface extérieure S50) et une hauteur H54.2 (mesurée selon une direction perpendiculaire à la surface extérieure S50) nettement inférieure à la largeur L54.2. Selon un mode de réalisation visible sur la figure 10, l'élément longiligne 50 et la forme hélicoïdale 54 positionnée autour de l'élément longiligne 50 forment une unique et même pièce.

Selon un autre mode de réalisation visible sur la figure 11, l'élément longiligne 50 et la forme hélicoïdale 54 positionnée autour de l'élément longiligne 50 sont deux pièces distinctes. Selon ce mode de réalisation, la forme hélicoïdale 54 est enroulée autour de l'élément longiligne 50. Selon un autre mode de réalisation, l'élément longiligne 50 comprend en surface des brins tressés qui forment une couche tubulaire tressée, chacun des brins suivant une trajectoire hélicoïdale. Selon cet autre mode de réalisation, la forme hélicoïdale 54 est obtenue en retirant au moins un des brins tressés en surface de l'élément longiligne 50.

Selon des modes de réalisation visibles sur les figures 8 et 9, pour un même élément longiligne 50, le système mobile 44 comprend plusieurs formes hélicoïdales 54, 54'. Selon un mode de réalisation visible sur la figure 8, le système mobile 44 comprend une première forme hélicoïdale 54 située autour d'un premier tronçon 52 de l'élément longiligne 50 ainsi qu'une deuxième forme hélicoïdale 54' située autour d'un deuxième tronçon 52' de l'élément longiligne 50, distinct et éventuellement espacé du premier tronçon 52.

Selon un autre mode de réalisation visible sur la figure 9, le système mobile 44 comprend plusieurs formes hélicoïdales 54, 54' situées au moins en partie autour du même tronçon 52 du même élément longiligne 50.

Pour un élément longiligne 50 donné, ladite au moins une forme hélicoïdale 54 présente autour de l'élément longiligne 50 s'étend sur au moins une partie de la longueur L50 de l'élément longiligne 50.

Selon un agencement, ladite au moins une forme hélicoïdale 54 présente autour de l'élément longiligne 50 s'étend sur toute la longueur L50 de l'élément longiligne 50.

Selon un autre agencement, ladite au moins une forme hélicoïdale 54 présente autour de l'élément longiligne 50 s'étend sur une partie de la longueur L50 de l'élément longiligne 50, notamment sur au moins un tronçon de l'élément longiligne 50 qui présente une longueur supérieure ou égale à 2/3 de la longueur L50 de l'élément longiligne 50. Lorsque ladite au moins une forme hélicoïdale 54 s'étend sur seulement une partie de la longueur L50 de l'élément longiligne 50, elle est essentiellement positionnée au niveau du tronçon 52 de l'élément longiligne 50 interférant avec le flux d'air 42 lorsque le système mobile 44 est dans la position déployée. Dans ce cas, la forme hélicoïdale 54 s'étend à partir de la deuxième extrémité 50.2 de l'élément longiligne 50.

Selon un mode de réalisation, chacun des premier et deuxième éléments longilignes 50, 50' présente un diamètre de l'ordre de 15 mm. Selon ce mode de réalisation, la forme hélicoïdale 54 présente un pas compris entre 1 fois et 10 fois le diamètre de l'élément longiligne, de préférence égal à environ 50 mm. La forme hélicoïdale 54 présente une dimension comprise entre environ un tiers et un quart du diamètre de l'élément longiligne 50. Lorsque l'élément longiligne 50 a un diamètre de l'ordre de 15 mm, la forme hélicoïdale 54 présente une dimension comprise entre 4 et 5 mm +/- 0,5 mm.

Selon un autre mode de réalisation visible sur la figure 12, chaque élément longiligne 50, 50' comprend un conduit 58 inséré dans une gaine 60 qui présente au niveau de sa surface extérieure une forme hélicoïdale 54. Selon ce mode de réalisation, le conduit 58 présente un diamètre de l'ordre de 15 mm. La gaine 60 présente un diamètre de l'ordre de 20 mm +/- 2 mm et la forme hélicoïdale 54 présente une largeur de l'ordre de 7 mm et une hauteur ou profondeur de l'ordre de 2 mm.

## Revendications

1. Aéronef comprenant un carénage ainsi qu'au moins un système mobile (44) configuré pour occuper une position déployée dans laquelle le système mobile (44) est positionné au moins en partie hors du carénage ainsi qu'une position rétractée dans laquelle le système mobile (44) est positionné à l'intérieur du carénage, ledit système mobile (44) comportant au moins des premier et deuxième éléments longilignes (50, 50'), chacun d'eux présentant une surface extérieure (S50) et étant positionné de manière à interférer avec un flux d'air (42) s'écoulant selon une direction longitudinale (DL) lorsque le système mobile (44) est en position déployée, lesdits premier et deuxième éléments longilignes (50, 50') étant décalés entre eux selon la direction longitudinale (DL), le premier élément longiligne (50) étant positionné en amont du deuxième élément longiligne (50') selon le sens d'écoulement du flux d'air (42) ; **caractérisé en ce que** le système mobile (44) comprend au moins une première forme hélicoïdale (54) autour du premier élément longiligne (50) ainsi qu'au moins une deuxième forme hélicoïdale (54) autour du deuxième élément longiligne (50') et **en ce que** la première forme hélicoïdale (54) présente un premier sens d'enroulement et la deuxième forme hélicoïdale (54) présente un deuxième sens d'enroulement opposé au premier sens d'enroulement et/ou la première forme hélicoïdale (54) présente un premier pas et la deuxième forme hélicoïdale (54) présente un deuxième pas différent du premier pas.

2. Aéronef selon la revendication 1, **caractérisé en ce que** l'élément longiligne (50) et la forme hélicoïdale (54) positionnée autour de l'élément longiligne (50) forment une unique et même pièce.

3. Aéronef selon la revendication 1, **caractérisé en ce que** l'élément longiligne (50) et la forme hélicoïdale (54) positionnée autour de l'élément longiligne (50) sont deux pièces distinctes.

4. Aéronef selon la revendication précédente, **caractérisé en ce que** la forme hélicoïdale (54) est enroulée autour de l'élément longiligne (50).

5. Aéronef selon l'une des revendications précédentes, **caractérisé en ce que** chaque élément longiligne (50, 50') comprend une première extrémité (50.1, 50.1') située à l'intérieur du carénage ou proche de ce dernier ainsi qu'une deuxième extrémité (50.2, 50.2') plus écartée que la première extrémité (50.1, 50.1') du carénage lorsque le système mobile (44) est en position déployée et présente une longueur (L50) correspondant à une distance séparant les première et deuxième extrémités (50.1, 50.2) en suivant l'élément longiligne (50, 50') et **en ce que** la forme hélicoïdale (54) présente autour de l'élément longiligne (50, 50') s'étend sur au moins un tronçon de l'élément longiligne (50) qui présente une longueur supérieure ou égale à 2/3 de la longueur (L50) de l'élément longiligne (50).

6. Aéronef selon la revendication précédente, **caractérisé en ce que** la forme hélicoïdale (54) s'étend à partir de la deuxième extrémité (50.2) de l'élément longiligne (50).

7. Aéronef selon l'une des revendications précédentes, **caractérisé en ce que** la forme hélicoïdale (54) présente un pas compris entre 1 et 10 fois le diamètre de l'élément longiligne (50, 50').

8. Aéronef selon l'une des revendications, **caractérisé en ce que** chacun des premier et deuxième éléments longilignes (50, 50') est un élément souple capable de se déformer.
